# EUROPEAN PATENT SPECIFICATION

(11) **EP 3 437 485 B1**
(45) Date of publication and mention of the grant of the patent: **28.07.2021**
(21) Application number: 17775529.5
(22) Date of filing: 31.03.2017
(51) Int. Cl.: A23L 2/60, A23F 3/16, A23L 2/00, A23L 27/00, A23L 27/30

(54) **STEVIA-CONTAINING BEVERAGE**
STEVIAHALTIGES GETRÄNK
BOISSON CONTENANT DE LA STEVIA

(30) Priority: 31.03.2016 JP 2016072450
(43) Date of publication of application: 06.02.2019
(73) Proprietor: Suntory Holdings Limited, Kita-ku, Osaka-shi Osaka 530-8203 (JP)
(72) Inventor: NAKAJIMA, Makoto, Kawasaki-shi Kanagawa 211-0067 (JP); KOBAYASHI, Yasuyuki, Kawasaki-shi Kanagawa 211-0067 (JP)
(74) Representative: Mewburn Ellis LLP
(86) International application number: PCT/JP2017/013577
(87) International publication number: WO 2017/170998

(56) References cited:
- EP-A1- 1 472 932
- WO-A1-2009/035047
- WO-A1-2013/066490
- WO-A1-2015/023928
- WO-A2-01/11988
- WO-A2-2011/097359
- FR-A1- 3 012 294
- JP-A- 2012 005 483
- JP-A- 2012 055 325
- JP-A- 2013 169 204
- JP-A- 2013 507 914
- US-A1- 2010 330 244
- US-A1- 2011 091 635
- US-A1- 2014 099 403
- US-A1- 2016 058 053
- KHAN ET AL: "Tea polyphenols for health promotion", LIFE SCIENCES, PERGAMON PRESS, OXFORD, GB, vol. 81, no. 7, 10 August 2007 (2007-08-10), pages 519-533, XP022193244, ISSN: 0024-3205, DOI: 10.1016/J.LFS.2007.06.011
- PRAKASH, I. et al.: "Development of Next Generation Stevia Sweetner: Rebaudioside M", FOODS, vol. 3, 2014, pages 162-175, XP055309887,

## Description

### TECHNICAL FIELD

Embodiments of the present invention relate to stevia-containing beverages.

### BACKGROUND ART

Stevia extracts are widely used as sweeteners and it is known that glycosides of terpenoids such as stevioside and Rebaudioside A function as sweet components. Recently, there has been progress in the analysis of sweet components contained in the stevia extract and studies on various steviol glycosides contained in the stevia extract have been conducted. For example, Patent Literature 1 proposes a technique for producing specific steviol glycosides (RebX, the same as RebM) and proposes the use thereof in sweetener compositions and beverages with a range of possible beverage ingredients including other stevia components. Flavonoids such as tea polyphenols are listed among many possible ingredients.

Physiological effects of polyphenols have recently attracted attention due to the increase in health consciousness, and the demand for polyphenol-rich beverages has increased too. For example polymerized polyphenols, a type of polyphenols, are known to have a lipase inhibition effect, as described in Patent Literature 2, and there are needs for beverages containing polymerized polyphenols.

US 2016/058053 describes stevia extracts for use in foods and beverages, with ingredient options similar to Patent Literature 1.

WO 01/11988 describes a taste-improving effect of polymerized polyphenols, especially polyproanthocyanidins from oak or grape seed, in foods and beverages.

US 2010/330244 describes a taste-improving effect of polymerized polyphenols on sweetened foods and beverages.

### CITATION LIST

### PATENT LITERATURE

Patent Literature 1: JP-A 2015-502404 (WO2013/096420)
Patent Literature 2: WO2005/077384 (US2007/178175A)

### SUMMARY

### TECHNICAL PROBLEM

Use of a stevia extract, in particular a steviol glycoside, in a beverage may result in a certain undesirable aftertaste.

Objects of the present invention are to provide beverages having an improvement in respect of continuing aftertaste caused by particular steviol glycosides, specifically Rebaudioside D (RebD) and Rebaudioside M (RebM).

### SOLUTION TO THE PROBLEM

The present invention as specified in claim 1 provides beverages comprising polymerized tea polyphenol and RebD and/or RebM, wherein the content (A) of the polymerized tea polyphenol is 1 to 55.5 ppm, a total content (B) of the RebD and/or RebM is 20 to 500 ppm, and B/A is 10 or more.

### ADVANTAGEOUS EFFECTS OF THE INVENTION

According to the present invention, beverages having an improvement in respect of continuing aftertaste caused by Rebaudioside D (RebD) and/or Rebaudioside M (RebM) are provided.

### BRIEF DESCRIPTION OF THE DRAWINGS

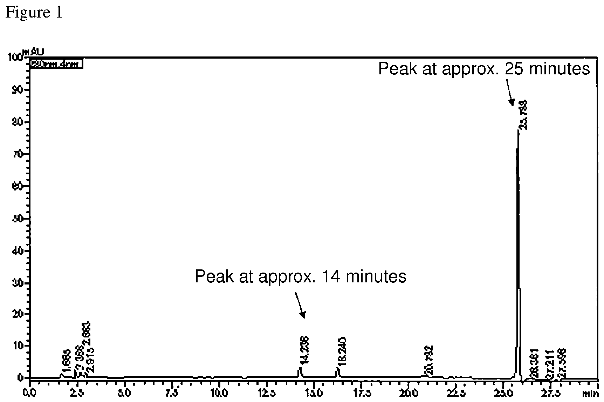

Figure 1 is an example of HPLC charts obtained by measuring samples containing a polymerized tea polyphenol.

### DESCRIPTION OF EMBODIMENTS

### Beverage

Embodiments of the present invention are beverages comprising a polymerized tea polyphenol and RebD and/or RebM, wherein a content (A) of the polymerized tea polyphenol is 1 to 55.5 ppm, the total content (B) of the RebD and/or RebM is 20 to 500 ppm, and the ratio B/A is 10 or more.

Rebaudiosides (hereinafter, referred as "Rebs") are known as sweet components contained in stevia extracts. The stevia extracts are extracts obtained by extraction and/or purification from stevia dry leaves. Stevia is a perennial plant in Asteraceae that is native to Paraguay in South America and its scientific name is Stevia Rebaudiana Bertoni. Because stevia contains components having about 300 times or more the sweetness of sugar, it is grown for extraction and use of these sweet components as a natural sweetener. Known Rebs include RebA, RebB, RebC, RebD, and RebE. Furthermore, the presence of various glycosides such as RebM described in JP-A 2012-504552 (WO2010/038911) has been recently reported. Embodiments of the present invention involve particularly RebM and RebD as stevia extracts. RebD and RebM may be obtained on the market or synthesized by an organic chemical method. Moreover, RebD and RebM may be separated and purified from a stevia extract as a starting raw material. For example, RebD can be purified according to the method described in US Patent 8414949 and RebM can be purified according to the method described in "Foods 2014, 3 (1), 162-175; doi: 10.3390/foods3010162".

Methods for quantifying RebD and RebM contained in a beverage are not particularly limited and known methods may be used, but, for example, they can be analyzed with high performance liquid chromatograph (HPLC) under the conditions described in JP-A 2012-504552 (WO2010/038911). RebD and RebM are analyzed herein by that method, unless otherwise described.

Beverages embodying the present invention may contain one or both of RebD and RebM and the total content of RebD and/or RebM relative to the weight of the beverage is 20 to 500 ppm (about 0.002 to 0.05% by weight), preferably 30 to 400 ppm, more preferably 40 to 350 ppm, and further more preferably 50 to 320 ppm. In embodiments, the total content of RebD and/or RebM in beverages according to the present invention may be 60 to 330 ppm relative to the weight of the beverage. The "total content of RebD and/or RebM" as used herein means the total content of RebD and RebM when the beverage contains both RebD and RebM, the content of RebD when the beverage contains only RebD, and the content of RebM when the beverage contains only RebM.

When a beverage according to the present invention contains only one of RebD and RebM, the content of the RebD or RebM in the beverage according to the present invention is 20 to 500 ppm (approximately 0.002 to 0.05% by weight), preferably 30 to 400 ppm, more preferably 40 to 350 ppm, and further more preferably 50 to 320 ppm relative to the weight of the beverages. Furthermore, in embodiments, the content of the RebD or RebM of beverages according to the present invention may be 60 to 330 ppm relative to the weight of the beverages.

Polymerized tea polyphenols (also referred to as polymerized catechins) are a type of polyphenols and known to have characteristic bitter taste and astringency. In the present invention, an undesirable aftertaste caused by RebD and RebM is suppressed by blending a certain amount of a polymerized tea polyphenol.

The content of the polymerized polyphenol relative to the weight of the beverage is 1 to 55.5 ppm (0.0001 to 0.0055% by weight), preferably 3 to 50 ppm, more preferably 5 to 50 ppm, further more preferably 10 to 45 ppm, and particularly preferably 15 to 40 ppm and may be 20 to 35 ppm. Furthermore, in embodiments, the content of the polymerized polyphenol in a beverage according to the present invention may be 5 to 30 ppm relative to the weight of the beverage. Unless otherwise specified, "ppm" as used herein, means weight/weight (w/w) ppm.

"Polymerized polyphenol" as used herein refers to a component that has a structure in which plural non-polymerized, monomeric catechins ((+)-catechin, (-)-epicatechin, (+)-gallocatechin, (-)-epigallocatechin, (-)-catechin gallate, (-)-epicatechin gallate, (-)-gallocatechin gallate, (-)-epigallocatechin gallate (herein, these are also described as the "non-polymeric polyphenol")) are linked by a tea-derived enzyme, an enzyme, light, pH change or the like, and that exhibits a peak at the same elution time (reference elution time: 25 minutes) as theaflavin (a product of Kurita Research Center) when analyzed by HPLC under the following conditions.
- Column: TSK-gel ODS-80TsQA (4.6 mmcp × 150 mm, Tosoh Corporation);
- Mobile phase:
   A: water:acetonitrile:trifluoroacetic acid = 900:100:0.5;
   B: water:acetonitrile:trifluoroacetic acid = 200:800:0.5
- Flow rate: 1.0 ml/min
- Column temperature: 40°C
- Gradient conditions:
   0% Solution B from the start of analysis to 5 minutes later,
   8% Solution B from 5 minutes to 11 minutes,
   10% Solution B from 11 minutes to 21 minutes,
   100% Solution B from 21 minutes to 22 minutes,
   Maintaining 100% from 22 minutes to 30 minutes,
   0% from 30 minutes to 31 minutes.
- Detection: A280nm (data collection time 30 minutes), quantified in peak area.
- Injection volume: 10 µL
- Standard substance: Oolong homobisflavan B (abbreviation: OHBF-B)

The amount of polymerized tea polyphenols is determined by using OHBF-B as a standard substance and preparing a standard curve. OHBF-B used as the standard substance may be, for example, one synthesized (preferably purified to a purity of 98% or more) according to the method described in Chem. Pharm. Bull 37 (12), 3255-3563 (1989) or the method described in Japanese Patent Laid-Open No. 2005-336117 (Example 3), one isolated from tea leaves, or the like.

Under the analysis conditions described above, a peak of polymerized tea polyphenol may overlap with a peak of another component. Examples of beverages containing such another component include beverages containing fruit juice, beverages containing a plant extract, and the like. In such a case, the analysis conditions described above are not suitable for quantification of the polymerized tea polyphenol, although they are suitable for identification thereof. In such a case, a peak that appears at approximately 14 minutes is used for the quantification. The value obtained by multiplying the peak area of the peak at approximately 14 minutes by 10 and the peak area of the peak at approximately 25 minutes are compared. If the former value is lower, then the former value is used for quantification of the polymerized tea polyphenol. An example of HPLC charts in which these peaks are seen is shown in Figure 1.

In embodiments of the present invention, the origin of the polymerized tea polyphenol is not particularly limited. For example, it may be one derived from a natural product, one obtained on the market, or one synthesized by an organic chemical method, but it is preferably a polymerized tea polyphenol derived from a natural product in view of a recent increase in nature orientation. Examples of the natural products include, but are not limited to, tea (green tea, white tea, black tea, oolong tea, mate, and the like). In embodiments of the present invention, the polymerized tea polyphenol is preferably derived from tea and more preferably derived from tea leaves of half fermented tea or fermented tea containing plenty of the polymerized tea polyphenol, in particular derived from oolong tea leaves. Moreover, the polymerized tea polyphenol may be a mixture of polymerized tea polyphenols of different origins.

The polymerized tea polyphenol used in embodiments of the present invention is exemplified by, specifically, besides the polymerized tea polyphenol called by common names such as thearubigin, the following polymerized tea polyphenols, and may be selected from the group consisting of these compounds. It is exemplified by: 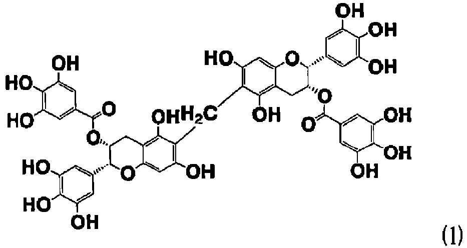 an epigallocatechin gallate trimer represented by the formula (2): 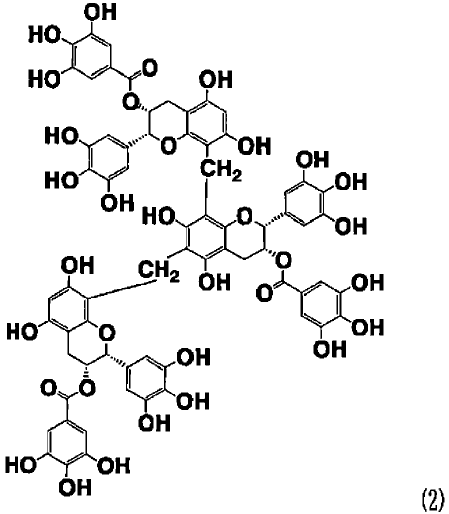 an epigallocatechin dimer represented by the formula (3): 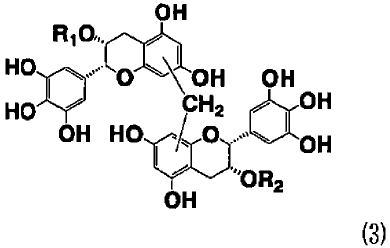 wherein R₁ and R₂ are each independently H or a galloyl group;
an epigallocatechin trimer represented by the formula (4): 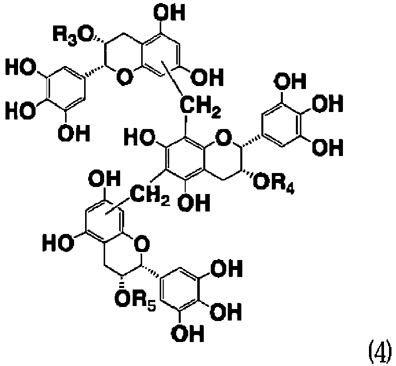 wherein R₃, R₄, and R₅ are each independently H or a galloyl group;
oolong theanin-3'-O-gallate represented by the formula (5): 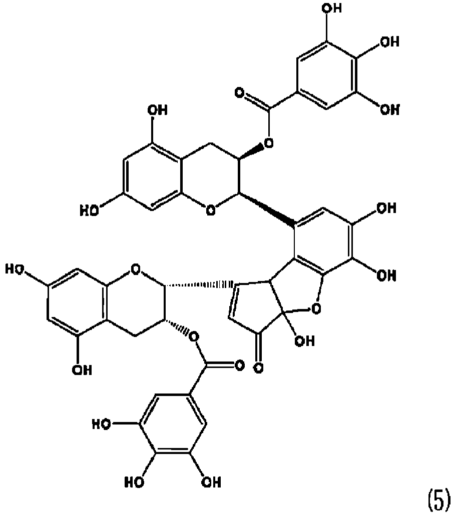 and may be selected from the group consisting of these compounds.

In embodiments of the present invention, the polymerized tea polyphenol can be obtained as a plant extract containing the polymerized tea polyphenol. It is obtained, for example, by a solvent extraction from tea leaves. The tea extract is preferably one derived from Camellia sinensis. Tea leaves used as a raw material may be one or more of green tea, which is unfermented tea, oolong tea, which is half fermented tea, and black tea, which is fermented tea, but, among others, tea leaves of half fermented tea or fermented tea containing a plenty of the polymerized tea polyphenol, in particular tea leaves of oolong tea are preferably used. Extraction solvents that may be used include water or hot water, methanol, ethanol, isopropanol, ethyl acetate, and the like and it may be extracted with one or a mixture of 2 or more of these. A preferred extraction solvent is hot water, to which sodium bicarbonate may be added as needed. A solvent extract of these tea leaves may be used as it is without purification, but a concentrated or purified extract, that is, a solvent extract of tea leaves from which components other than the polymerized tea polyphenol are selectively removed to increase the content of the polymerized tea polyphenol is preferably used. Since non-polymeric tea polyphenol generally has bitterness and astringency, it is particularly preferable that non-polymeric tea polyphenol is selectively removed. Examples of extracts thus obtained include extracts containing polymerized polyphenol at a concentration that is 4 times or more as high as the concentration of non-polymeric polyphenol, described in WO2005/077384 and the like.

Moreover, tea leaves may be subjected to extraction as they are, or subjected to extraction after treating the tea leaves containing the polymerized tea polyphenol and the non-polymeric polyphenol with an enzyme such as polyphenol oxidase or the like to further increase the degree of polymerization of the polymerized tea polyphenol, or an extract may be subjected to such an enzymatic treatment. The higher the degree of polymerization is and the higher the ratio of the polymerized tea polyphenol to the non-polymeric tea polyphenol is, the less unpleasant bitterness and astringency is present and the more preferable the flavor becomes.

In beverages embodying the present invention, low contents of non-polymeric polyphenol are preferable. The weight ratio (polymerized tea polyphenol content/ non-polymeric tea polyphenol content) of the polymerized tea polyphenol content to the non-polymeric tea polyphenol content in the beverages is preferably 1 or more, more preferably 1.2 or more, and more preferably 1.4 or more. To produce such beverages, a technique described in WO2005/077384 or the like may be used.

Furthermore, the weight ratio of a total content (B) of RebD and/or RebM relative to a content (A) of the polymerized tea polyphenol ([total content of RebD and/or RebM]/[content of polymerized tea polyphenol]: B/A) is 10.0 or more, more preferably 10.5 or more, and particularly preferably 11.5 or more. If A and B meet these conditions, it is possible to sufficiently exhibit a preferable sweetness as a sugar-containing beverage while suppressing an undesirable aftertaste caused by RebD and RebM. Moreover, in embodiments of the present invention, the range of the weight ratio of the total content (B) of RebD and/or RebM relative to the content (A) of the polymerized tea polyphenol ([total content of RebD and/or RebM]/[content of polymerized tea polyphenol]: B/A) is preferably 10.0 to 15.0 or 10.0 to 13.0, more preferably 10.0 to 12.5.

The ratio of the content of RebD relative to the content of the polymerized tea polyphenol ([content of RebD]/[content of polymerized tea polyphenol]) may be 8.9 or more, 9.5 or more, 10.0 or more, 10.5 or more, or 11.5 or more. The weight ratio of the content of RebD relative to the content of the polymerized tea polyphenol ([content of RebD]/[content of polymerized tea polyphenol]) is preferably 15.0 or less, more preferably 13.0 or less, and further more preferably 12.5 or less. The range of the weight ratio of the content of RebD relative to the content of the polymerized tea polyphenol ([content of RebD]/[content of polymerized tea polyphenol]) may be 8.9 to 15.0, 10.0 to 15.0, 10.0 to 13.0 or 10.0 to 12.5.

The ratio of the content of RebM relative to the content of the polymerized tea polyphenol ([content of RebM]/[content of polymerized tea polyphenol]) may be 8.9 or more, 9.5 or more, 10.0 or more, 10.5 or more, or 11.5 or more. The weight ratio of the content of RebM relative to the content of the polymerized tea polyphenol ([content of RebM]/[content of polymerized tea polyphenol]) is preferably 15.0 or less, more preferably 13.0 or less, and further more preferably 12.5 or less. The range of the weight ratio of the content of RebM relative to the content of the polymerized tea polyphenol ([content of RebM]/[content of polymerized tea polyphenol]) may be 8.9 to 15.0, 10.0 to 15.0, 10.0 to 13.0 or 10.0 to 12.5.

Beverages embodying the present invention may contain, as needed, additives usually contained in beverages, for example, antioxidants, emulsifiers, nutrient supplements (vitamins, calcium, minerals, amino acids), flavors, pigments, preservatives, flavoring agents, extracts, pH regulators, quality stabilizer, fruit juice, fruit juice puree, and the like. These additives may be blended singly in the beverages or a plurality of these components may be blended in combination in the beverages.

Embodiments of the present invention are not particularly limited, but examples include refreshing beverages, non-alcoholic beverages, alcoholic beverages, and the like. The beverages may be beverages containing no carbonic acid gas or may be beverages containing carbonic acid gas. Examples of the beverages containing no carbonic acid gas include, but are not limited to, tea beverages such as green tea, oolong tea, black tea, barley tea, mate, and the like, coffee, fruit juice beverages, milk beverages, sports drinks, and the like. Examples of the beverages containing carbonic acid gas include, but are not limited to, cola, diet cola, ginger ale, soda pop, and carbonated water provided with a fruit juice flavor. In particular, from a point of view to maintain the tea-like preferable flavor, embodiments of the present invention are preferably tea beverages such as green tea, oolong tea, black tea, barley tea, mate, and the like.

In beverages embodying the present invention, calories are preferably 20 kcal/100 ml or less and more preferably 10 kcal/100 ml or less or 5 kcal/100 ml or less. Since RebD and RebM contained in stevia extracts are low-calorie, they are particularly suitable in producing low-calorie or non-calorie beverages.

Beverages embodying the present invention may be provided in containers, as needed. The form of the containers is not limited at all and the beverages may be filled into containers such as bottles, cans, barrels, or PET bottles and provided as beverages in containers. Moreover, the method of filling the beverages into containers is not particularly limited.

Beverages embodying the present invention may be produced in an appropriate manner, for example, by blending the polymerized tea polyphenol and RebD and/or RebM such that a content (A) of the polymerized tea polyphenol in the beverage is 1 to 55.5 ppm, a total content (B) of the RebD and/or RebM in the beverage is 20 to 500 ppm, and B/A is 10 or more.

The method of blending the polymerized tea polyphenol is not particularly limited and, for example, the polymerized tea polyphenol itself may be blended or a raw material containing the polymerized tea polyphenol may be blended. Moreover, the method of blending RebD and/or RebM is not particularly limited as well and RebD and/or RebM itself may be blended or a raw material containing RebD and/or RebM may be blended. Preferable polymerized tea polyphenols and preferable content ranges thereof, and preferable total content ranges of RebD and/or RebM are as described above as for beverages.

A beverage embodying the present invention may comprise a step of blending an additive or the like usually blended into beverages and/or a step of filling the beverage into a container. Types of the additive and the container are as described above as for beverages and filling of the container may be done by using a known method.

According to the present invention, it is possible to exhibit a preferable sweetness as a sugar-containing beverage while suppressing an undesirable continuity of sweetness caused by RebD and/or RebM. The aforementioned method of production of the beverage may be regarded as a method for suppressing an undesirable continuity of sweetness caused by RebD and RebM while exhibiting sweetness suitable for a beverage.

### EXPERIMENTAL EXAMPLES

Hereinafter, embodiments of the present invention are described referring to specific examples, but embodiments of the present invention are not limited thereto. Herein, unless otherwise stated specifically, % and parts are by weight and the stated numerical ranges include the endpoints.

### Production and evaluation of beverage

Beverages in containers were prepared in the formulations set forth in the following tables and sensory evaluation for flavors of the beverages was conducted. More specifically, the polymerized tea polyphenols described below and RebD (purity of 99.9% or more) were blended to prepare sample beverages and the beverages were filled into containers.

Polymerized tea polyphenol: 600 kg of oolong tea leaves were subjected to an extraction treatment with 7800 kg of a sodium bicarbonate solution obtained by adding 0.15% by weight of sodium bicarbonate into hot water (95°C) to obtain approximately 7000 kg of an oolong tea extract. Tea non-polymeric polyphenol and caffeine were removed by passing the extract through 400 kg of granular active carbon (GW-H32/60 manufactured by Kuraray Co., Ltd.) while maintaining the temperature of this extract within 60 to 65°C. This passage liquid (liquid after the active carbon treatment) was concentrated under reduced pressure to obtain approximately 900 kg of a high content polymerized tea polyphenol extract (concentrate of oolong tea extract, extract) with Brix 11. A measurement of the polymerized tea polyphenol concentration in the resultant extract A by HPLC under the conditions described above indicated that the concentration of the polymerized tea polyphenol was 12,000 ppm.

Subsequently, a sensory evaluation test for the "masking effect on continuity of sweetness" and "preferable sweetness as beverage" was conducted by tasting of sample beverages by expert panels. The sensory evaluation was conducted in 2 grades by the following standard. For either of the evaluation categories, point 2 indicates a sufficient quality.
"Preferable sweetness": this was evaluated in terms of pleasant sweetness that allows 500 ml of beverage to be drunk without tiring of it (2 points: preferable, 1 point: not so preferable). "Masking effect on continuity of sweetness": this was evaluated in terms of alleviation of continuity of sweetness remained in mouth characteristic of RebD and/or RebM in 500 ml of the beverage (2 points: effective, 1 point: not so effective).

**Table 1**

| Sample No. | 1 | 2 | 3 | 4 | 5 | 6 | 7 | 8 | 9 | 10 |
|---|---|---|---|---|---|---|---|---|---|---|
| Polymerized tea polyphenol (ppm) | 5 | 5 | 5 | 20 | 30 | 30 | 30 | 40 | 50 | 60 |
| Reb D (ppm) | 15 | 45 | 60 | 250 | 250 | 300 | 330 | 250 | 550 | 500 |
| Reb D/Polymerized tea polyphenol | 3.0 | 9.0 | 12.0 | 12.5 | 8.3 | 10.0 | 11.0 | 6.3 | 11.0 | 8.3 |
| Masking effect on continuity of sweetness | 1 | 1 | 2 | 2 | 1 | 2 | 2 | 1 | 2 | 1 |
| Preferable sweetness | 1 | 2 | 2 | 2 | 2 | 2 | 2 | 2 | 1 | 1 |

The polymerized tea polyphenol content and the RebD content in the sample beverages and the results of the sensory evaluation are illustrated in Figure 1. As apparent from Table 1, it was possible to sufficiently exhibit flavors as a sugar-containing beverage, while masking lingering of sweetness caused by stevia by adjusting the polymerized tea polyphenol content and the RebD content within the ranges according to the present invention.

Moreover, an effect similar to that found with RebD was confirmed when sample beverages were prepared in the same way as described above except that RebM was used instead of RebD and the polymerized tea polyphenol content, the RebM content, and the weight ratio of RebM content/polymerized tea polyphenol content (M/A) were adjusted to within the ranges according to the present invention. The results are illustrated in Table 2.

**Table 2**

| Sample No. | 11 | 12 | 13 | 14 | 15 | 16 |
|---|---|---|---|---|---|---|
| Polymerized tea polyphenol (ppm) | 5 | 5 | 30 | 30 | 50 | 60 |
| Reb M (ppm) | 15 | 60 | 250 | 330 | 550 | 500 |
| Reb M/Polymerized tea polyphenol | 3.0 | 12.0 | 8.3 | 11.0 | 11.0 | 8.3 |
| Masking effect on continuity of sweetness | 1 | 2 | 1 | 2 | 2 | 1 |
| Preferable sweetness | 1 | 2 | 2 | 2 | 1 | 1 |

Furthermore, the difference between the effects of different Rebs was examined as follows. First, sample beverages were prepared in the same way as described above except that RebA was used instead of RebD and RebM. The polymerized tea polyphenol content and the RebA content in the beverage were measured and the weight ratio RebA content/ polymerized tea polyphenol content (C/A) was calculated (Table 3). Sensory evaluation tests were conducted according to the methods described above. The results are illustrated in Table 3. It was revealed that the effect was inferior with RebA.

**Table 3**

| | 17 |
|---|---|
| Polymerized tea polyphenol (ppm) (A) | 5 |
| RebA (ppm) (C) | 60 |
| C/A | 12.0 |
| Masking effect on continuity of sweetness | 1 |
| Preferable sweetness | 2 |

## Claims

1. A beverage comprising polymerized tea polyphenol and RebD and/or RebM, wherein the content (A) of the polymerized tea polyphenol is 1 to 55.5 ppm, the total content (B) of RebD and/or RebM is 20 to 500 ppm, and B/A is 10 or more.

2. Beverage according to claim 1 wherein the polymerized tea polyphenol is derived from a tea extract.

3. Beverage according to claim 2 wherein the tea extract is derived from Camellia sinensis.

4. Beverage according to any of claims 1 to 3 wherein the beverage has calories of 20 kcal/100 ml or less.

## Patentansprüche

1. Getränk, das polymerisiertes Tee-Polyphenol und RebD und/oder RebM umfasst, wobei der Gehalt (A) des polymerisierten Tee-Polyphenols 1 bis 55,5 ppm beträgt, der Gesamtgehalt (B) an RebD und/oder RebM 20 bis 500 ppm beträgt und B/A 10 oder mehr beträgt.

2. Getränk nach Anspruch 1, wobei das polymerisierte Tee-Polyphenol aus einem Tee-Extrakt stammt.

3. Getränk nach Anspruch 2, wobei der Tee-Extrakt aus *Camellia sinensis* stammt.

4. Getränk nach einem der Ansprüche 1 bis 3, wobei das Getränk 20 kcal/100 ml oder weniger aufweist.

## Revendications

1. Boisson comprenant du polyphénol de thé polymérisé et du RebD et/ou RebM, dans laquelle la teneur (A) du polyphénol de thé polymérisé est de 1 à 55,5 ppm, la teneur totale (B) en RebD et/ou RebM est de 20 à 500 ppm, et B/A est de 10 ou plus.

2. Boisson selon la revendication 1, dans laquelle le polyphénol de thé polymérisé est dérivé d'un extrait de thé.

3. Boisson selon la revendication 2, dans laquelle l'extrait de thé est dérivé de Camellia sinensis.

4. Boisson selon l'une quelconque des revendications 1 à 3, dans laquelle la boisson présente des calories de 20 kcal/100 ml ou moins.
